(19) Europäisches Patentamt
European Patent Office
Office européen des brevets

(11) Publication number: 0 222 408 B1

# (12) EUROPEAN PATENT SPECIFICATION

(45) Date of publication of patent specification: 15.01.92

(51) Int. Cl.[5]: C08L 27/16, //(C08L27/16, 71:02)

(21) Application number: 86115816.0

(22) Date of filing: 14.11.86

## (54) Vulcanizable compositions of fluoroelastomers exhibiting improved processability and chemical stability.

(30) Priority: 15.11.85 IT 2286585

(43) Date of publication of application: 20.05.87 Bulletin 87/21

(45) Publication of the grant of the patent: 15.01.92 Bulletin 92/03

(84) Designated Contracting States: DE FR GB NL

(56) References cited:
FR-A- 2 413 426
GB-A- 1 356 344

(73) Proprietor: AUSIMONT S.p.A.
31, Foro Buonaparte
I-20121 Milano(IT)

(72) Inventor: Strepparola, Ezio
6, viale Partigiano
I-24047 Treviglio Bergamo(IT)
Inventor: Moggi, Giovanni
14, via Galilei
I-20124 Milan(IT)
Inventor: Di Fede, Cinzia
2, via Isonzo
I-21020 Casciago Varese(IT)
Inventor: Cirillo, Gianna
8/7, Salita S. Francesco
I-16124 Genova(IT)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
W-8000 München 40(DE)

EP 0 222 408 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to new processing coadjuvants for improving the processability and chemical stability of vulcanizable compositions of fluoroelastomers.

In particular, the invention relates to the use of mono-and di-hydroxypolyfluoroethers as plasticizers in vulcanizable compositions of fluoroelastomers based on vinylidene fluoride.

Vulcanized elastomers based on vinylidene fluoride copolymers, in which vinylidene fluoride is copolymerized with one or more monomers containing an ethylenic unsaturation and at least one fluorine atom are well-known and are widely utilized for a range of applications which require an exceptional chemical stability towards solvents, lubricants, fuels, acids and the like.

The vulcanized articles obtained from such elastomeric polymers are most suitably utilized as sealing gaskets in general, both in static and dynamic conditions, in the automotive, aeronautic, missile, naval, mechanical and chemical sectors. They are also used to make various supports impermeable, such as protective clothes against aggressive chemical agents.

According to the most advanced prior art, the vulcanizable compositions of fluoroelastomers based on vinylidene fluoride comprise:

(A) A copolymer of vinylidene fluoride with at least one other fluorinated monomer containing an ethylenic unsaturation;

(B) A vulcanization accelerator selected from quaternary ammonium salts, quaternary phosphonium salts and phosphoranamine derivatives;

(C) One or more basic acceptors (basic agents which are acceptors of acid) such as, for example, MgO and $Ca(OH)_2$;

(D) A polyhydroxylated cross-linking agent.

Examples of these compositions are described in GB-A-1 356 344 and US-A-3 876 654 and 4 259 463.

The following requirements have recently gained importance in the field of fluorinated elastomers:

1. A general improvement of the rheological properties and processability of the mixtures.

2. A reduction of the hardness of the mixtures (with respect to the value of Shore hardness A - 75, reported by Kirk Othmer - III ed. (1980), Vol. 8, page 509, as being typical for a fluoroelastomer).

3. An easy extrusion of articles with a complicated profile and of considerable size.

4. The production of vulcanized articles with improved chemical stability towards methanol and fluid lubricants.

5. An improvement of the low temperature properties without affecting the thermal stability at high temperatures.

The use of processing coadjuvants in order to overcome poor extrudability of the mixtures and to avoid their adhesion to the mould and the soiling of the moulds is well-known.

The processing coadjuvants are products acting as plasticizers such as vegetable waxes, low molecular weight polyethylenes, stearates, polyesters, and the like.

By using such plasticizers, it is possible to achieve the aims 1 to 3 mentioned above.

However, these plasticizers of the art exhibit various drawbacks such as impairment of the elastic properties, lower heat stability and high compression set values.

It has now, surprisingly, been found that, with compositions according to the present invention, aims 1 to 5 can be achieved.

Thus, it is the object of the present invention to provide additives of the mono- and di-hydroxypolyfluoroethers class, comprising fluorooxyalkylene repeating units selected from the following classes:

Mono-hydroxypolyfluoroethers:

Fluoropolyethers having a molecular weight ranging from 400 to 10 000.

1) $(C_3F_6O)$ $(CFXO)$

where X is -F or $-CF_3$; said units being statistically distributed along the fluoropolyoxyalkylene chain;

2) $(C_3F_6O)$;

3) $(CH_2CF_2CF_2O)$

Di-hydroxypolyfluoroethers:

Fluoropolyethers having a molecular weight from 2 500 to 10 000.

4) $(C_2F_4O)$, $(CF_2O)$, said units being statistically distributed along the fluoropolyoxylalkylene chain;

5) $(C_3F_6O)$, $(C_2F_4O)$, $(CFXO)$, where X is -F or $-CF_3$,

said units being statistically distributed along the fluoropolyoxyalkylene chain;
6) ($CH_2$ - $CF_2$ - $CF_2$ -O),
said units being linked within the fluoropolyoxyalkylene chain in the following manner:

$$-(O\text{-}CF_2\text{-}CF_2\text{-}CH_2)_p - O - R'_f - O -(CH_2CF_2\text{-}CF_2\text{-}O)_q-$$

where $R'_f$ is a fluoroalkylene group of 1 to 8 carbon atoms and p and q are integers, p + q having a value of 9 to 38;
7)

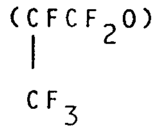

said units being linked within the fluoropolyoxyalkylene chain in the following manner:

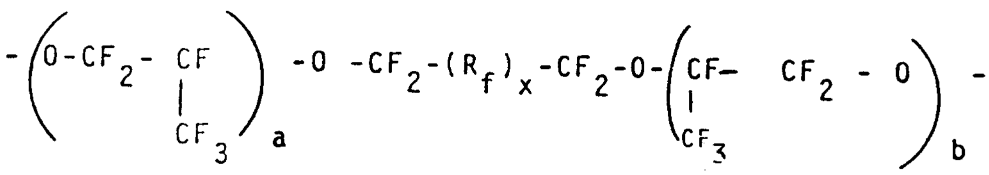

where $R_f$ is a fluoroalkylene group of 1 to 8 carbon atoms, x is 0 or 1, a + b are integers, a + b having a value of 12 to 50.

The hydroxylated compounds of the indicated classes may also be present as mixtures.

Monohydroxypolyfluoroethers of class 1 are, in particular, selected from those having the following general formula:

$$CF_3\text{-}(C_3F_6O)_{m'}\ (CFXO)_{n'} - CFX - ZH$$

with

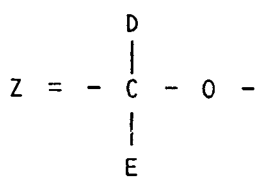

where D and E are the same or different and are selected from -H, $-CH_3$ and $-CF_3$, X is -F or $-CF_3$ and m' and n' are positive integers having values of 1 to 40 such that the m'/n' ratio ranges from 1 to 20.

These compounds may be prepared by the process described in US-A-3 513 203 and 3 847 978, the -COF end group being converted into the -OH group according to US-A-3 810 174.

Monohydroxypolyfluoroethers of class 2) are, in particular, selected from those having the following general formula:

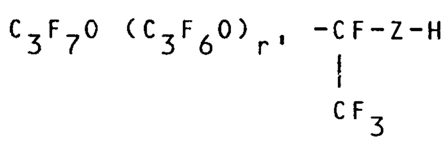

wherein r' is an integer having a value of 1 to 45 and Z is as defined above.

These products are described in US-A-3 242 218, wherein the group -COF is converted so as to obtain

the end group -OH, as is described in US-A-3 847 978 and 3 810 874.

Monohydroxypolyfluoroethers of class 3) are, in particular, selected from those having the following general formula:

$F(CH_2CF_2CF_2O)_{s'}-CH_2CF_2-ZH$

where s' is an integer having a value of 2 to 50 and Z is as defined above.

These products are described in EP-A-148 482 in which the group -COF is converted so as to obtain the end group -OH, as is described in US-A-3 847 978 and 3 810 874.

Fluoropolyoxyalkylene diols belonging to class 4) are, in particular, selected from those having the following general formula:

$HZ-CF_2O(C_2F_4O)_m(CF_2O)_nCF_2-ZH$

wherein Z is as defined above, m and n are integers such that (m + n) has a value of 24 to 100 and the ratio m/n ranges from 0.5 to 1.5, with the oxyfluoroalkylene units being statistically distributed along the chain. These compounds may, for example, be prepared according to the methods described in US-A-3 810 874.

Fluorianted diols belonging to class 5) are, in particular, selected from the compounds having the following general formula:

$HZ-CF_2-(C_3F_6O)_r(C_2F_4O)_s(CFXO)_t-CF_2-ZH$

wherein X is -F or $-CF_3$, r is an integer having a value of 2 to 8, s is an integer having a value of 10 to 40, t is an integer having a value of 10 to 40 and Z is as defined above.

As described in US-A-3 665 041, such compounds are obtainable by photooxidation of mixtures of $C_3F_6$ and $C_2F_4$ and by subsequent conversion of end groups -COF into groups containing the end group -OH, said conversion being accomplished according to the known methods described in US-A-3 847 978 and 3 810 874.

Fluorinated diols belonging to class 6) are, in particular, selected from the compounds having the general formula:

$HZ-CF_2CH_2(OCF_2CF_2CH_2)_p-OR'_f-O-(CH_2CF_2CF_2O)_qCH_2CF_2-ZH$

wherein Z is as defined above, and are described in EP-A-148 482. The end groups -COF may be converted to end groups -OH as is described in US-A-3 847 978 and 3 810 874.

Fluorinated diols belonging to class 7) are, in particular, selected from the compounds having the general formula:

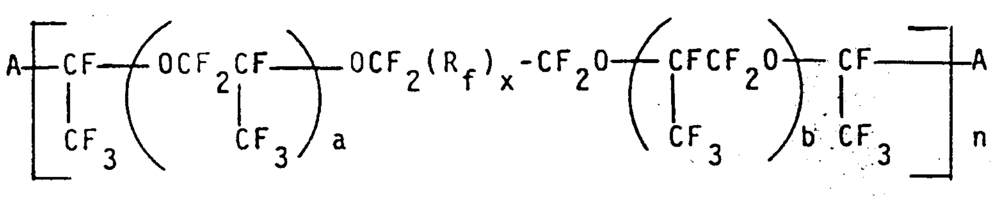

wherein A is a group comprising the end group -OH, for example $CH_2OH$, and n is an integer equal to or greater than 1.

Such compounds are described in EP-A-151 877.

The fluoroelastomers constituting component (A) are, generally, copolymers of vinylidene fluoride with hexafluoropropene, optionally containing tetrafluoroethylene.

It is also possible to utilize chlorotrifluoroethylene, 1-hydropentafluoropropene and 2-hydropentafluoropropene instead of hexafluoropropene.

Mixtures of the above-mentioned comonomers may also be employed.

The tetrafluoroethylene and/or hexafluoropropene units in the copolymers may be partially or fully replaced by perfluoroalkylvinylether units.

Generally, the amount of perfluoroalkylvinylether units ranges from 0.5 to 15 mole%, based on the total

amount of copolymer. Preferably, it is lower than 5 mole%.

Other fluorinated monomers may also be employed as comonomers, provided they contain a double bond of the ethylene type and at least one fluorine atom.

Compounds (A) may be prepared as described in the literature (Kirk Othmer, Encyclopaedia of Chem. Technology, Vol. 8, pages 500 ff., 1979) by preferably operating in an aqueous emulsion and, optionally, in the presence of chain transfer agents like those described in US-A-4 000 356.

The copolymers in which the amount of vinylidene fluoride ranges from 40 to 85 mole%, the amount of perfluoropropene ranges from 15 to 30 mole% and the amount of tetrafluoroethylene ranges from 0 to 30 mole% are particularly preferred.

Accelerator (B) belongs to the classes previously mentioned, the preferred compounds being:

- From among the quaternary ammonium salts: methyltrioctylammonium chloride, laurylpyridinium bromide and benzyltrioctylammonium chloride;
- From among the quaternary phosphonium salts: benzyltriphenylphosphonium chloride, benzyltriphenylphosphonium tetrafluoroborate, methyltrioctylphosphonium acetate and carbethoxymethyltriphenylphosphonium bromide;
- From among the phosphoranamine derivatives or aminophosphonium compounds: 1-chloro - 1-benzyl - 1,1-diphenyl-N(diethyl)-phosphoranamine,1-tetrafluoroborate - 1-benzyl-N,N′,N″-(hexamethyl)-phosphorantriamine, 1-bromo - 1-benzyl-1-phenyl-N,N′-(tetraethyl)phosphorandiamine.

Component (C) is an inorganic compounds such as an oxide of a divalent metal, for example, ZnO, MgO, PbO, CaO or a mixture of the oxides and hydroxides of said metals or a salt of a weak acid, as is described in US-A-3 876 654.

Component (D) is a polyhydroxylated compound known as a vulcanizing agent for fluoroelastomers such as, for example, hydroquinone, resorcin, 2,2′-bis(p-hydroxyphenyl)-hexafluoropropane (known as bisphenol AF) and 2,2′-bis(p-hydroxyphenyl)-propane (known as bisphenol A).

Examples of these compounds are listed in US-A-3 876 654.

Generally, per 100 parts by weight of an elastomeric copolymer of vinylidene fluoride (A) and one or more fluorinated monomers as indicated above the following are used:

- From 1 to 40 parts by weight of basic acceptor (C), consisting of one or more basic oxides of divalent metals, as indicated above, optionally, in the form of cationic complexes or chelates, optionally, in the presence of 0 to 10 parts by weight of one or more basic compounds, selected from the group comprising the calcium, strontium and barium hydrates and the metal salts of weak acids such as carbonates, benzoates and phosphates of calcium, strontium, barium, sodium and potassium, optionally, in the form of complexes with the usual cationic chelates or complexing agents of type well-known to those skilled in the art;
- From 0.5 to 15 parts by weight of mono- or de-hydroxypolyfluoroether or the invention as coadjuvant;
- From 0.2 to 4 parts by weight of vulcanization accelerator (B) selected from the classes described above;
- From 0.3 to 6 parts by weight of compounds (D).

The vulcanizable compositions of the above-mentioned type are vulcanized by means of a process wherein said compositions are first heated under pressure at temperatures from 130 to 230 °C, preferably from 160 to 200 °C, for 0.5 to 60 minutes and, preferably, from 1 to 20 minutes. The articles obtained are then post-vulcanized in an oven or in a furnace at atmospheric pressure, at temperatures from 130 to 315 °C, preferably from 200 to 275 °C, for 5 to 48 hours, preferably from 10 to 24 hours.

According to the present invention, small amounts (0.5 to 4 parts) of polyfluorethers not containing functional groups corresponding to the classes indicated for the mono-and di-hydroxypolyfluoroethers may be added to the fluoroelastomers.

It has been found that said compounds, which do not contain functional groups, are compatible with the compositions of the invention, while they would not be compatible in the absence of the coadjuvants used in accordance with the invention, resulting in blooming phenomena.

The improved results obtainable with the coadjuvants used in the present invention as compared with those of the art are due to the fact that, during the vulcanization process, a chemical reaction between the monohydroxylated or dihydroxylated fluoropolyether of the invention and the elastomeric chain takes place. The coadjuvants is thereby prevented from blooming or migrating during vulcanization and post-vulcanization.

In fact, extraction tests with 1,1,2-trichloro-1,1,2-trifluorethane (F 113) at 40 °C showed that, prior to vulcanization the hydroxylated fluoropolyether could be recovered from the mixture nearly quantitatively. Identical extraction tests conducted after vulcanization did not lead to the isolation of the hydroxylated fluoropolyether.

The vulcanizable compositions according to the invention may, in addition to the above-mentioned substances (A) to (D) and in addition to the coadjuvant, contain carbon black and white coloured fillers, while the used of plasticizers and lubricants of the conventional type such as stearates, arylphosphates, polyethers, polyesters, polyethylene, sulphones, sulphoxides and other known additives which cause the above-mentioned drawbacks may be avoided.

The components of the vulcanizable compositions of the present invention can, readily, be incorporated into the vinylidene fluoride elastomeric copolymer, either individually or premixed.

In this way, it is possible to attain good vulcanization rates at the normal processing temperatures without encountering any risk of scorching (prevulcanization) during the initial processing steps which precede the actual vulcanization step.

A further advantage of the present invention resides in the complete elimination of the undesired phenomenon of "reduced mould shrinkage" of fluorinated articles, particlarly O-ring gaskets, during vulcanization in a closed mould and under pressure.

The following examples merely serve to illustrate the invention and do not limit it in any way.

EXAMPLES 1 to 12

In the examples reported in tables 1 and 2 the following products were used:

Fluoroelastomer 1 = Copolymer $CH_2 = CF_2/C_3F_6$ in a molar ratio of 4/1, having a specific weight of 1.8 at 25 °C, known as Tecnoflon NM® (Montedison S.p.A).

Fluoroelastomer 2 = Terpolymer $CH_2 = CF_2/C_3F_6/C_2F_4$ in a molar ratio of 3/1/1, having a specific weight of 1.86 at 25 °C and a Mooney viscosity ML (1 + 4) of 120 at 100 °C.

Accelerator 1 = 1-chloro-1,1-diphenyl-1-benzyl - N-diethylphosphoranamine.

Accelerator 2 = Benzyltriphenylphosphonium chloride.

Fluoropolyether 1 of formula:

$$CF_3O(C_3F_6O)_{m'}(CF_2O)_{n'}CF_2CH_2OH$$

having an average molecular weight (based on the hydroxyl titer) of 600.

Fluoropolyether 2 of the same general formula as fluoropolyether 1 but with a mean molecular weight of 1 500.

The results of the tests reported in tables 1 and 2 show that the compositions of the invention lead to a decrease in hardness, to better results in the extrudability test, to better properties in the low temperatures test (brittle point) and in the chemical stability test.

Examples 1, 4 and 8 are comparative tests.

TABLE 1

| Elastomeric composition: VULCANIZATION: in press at 170°C for 10 min., in oven at 250°C for 16 hours | | EXAMPLE 1 | 2 | 3 | 4 | 5 | 6 | 7 |
|---|---|---|---|---|---|---|---|---|
| Elastomer 1 | p. by wt. | 100 | 100 | 100 | 100 | 100 | 100 | 100 |
| Bisphenol AF | p. by wt. | 1,6 | 1,6 | 1,6 | 1,6 | 1,6 | 1,6 | 1,6 |
| Accelerator 1 | p. by wt. | 0,5 | 0.5 | 0.5 | - | - | - | - |
| Accelerator 2 | p. by wt. | - | - | - | 0,5 | 0,5 | 0,5 | 0,5 |
| MgO | p. by wt. | 3 | 3 | 3 | 3 | 3 | 3 | 3 |
| $Ca(OH)_2$ | p. by wt. | 6 | 6 | 6 | 6 | 6 | 6 | 6 |
| Fluoropolyether 1 | p. by wt. | - | 2 | 5 | - | - | - | - |
| Fluoropolyether 2 | p. by wt. | - | - | - | - | 1 | 2 | 5 |
| CARBON BLACK MT | p. by wt. | 25 | 25 | 25 | 25 | 25 | 25 | 25 |
| EXTRUDABILITY TEST (4) | (edge | 7 | 8 | 9 | 7 | 7 | 8 | 9 |
| | (surface | B | A | A | B | A | A | A |
| CHARACTERISTICS OF THE VULCANIZATE | | | | | | | | |
| Tensile strength (1) | M Pa | 13,0 | 12,0 | 10,0 | 13,5 | 13,0 | 12,0 | 10,0 |
| Elongation at break (1) | % | 200 | 210 | 230 | 195 | 210 | 220 | 230 |
| Shore hardness A (2) | points | 70 | 68 | 62 | 71 | 68 | 66 | 60 |
| Characteristics at low temperature: Brittle Point (3) | °C | -14/-21 | -20/-25 | -22/-27 | -13/-21 | -17/-24 | -22/-28 | -23/-29 |
| CHEMICAL STABILITY (5) | | | | | | | | |
| Methanol, 3 days, 20°C $\Delta$ V | % | 40 | 35 | 30 | 40 | 38 | 36 | 31 |
| Fuel C., 7 days, 70°C $\Delta$ V | % | 18 | 17 | 12 | 17 | 16 | 15 | 11 |

(1) ASTM D 412
(2) ASTM D 2240
(3) ASTM D 746
(4) ASTM D 2230 - 73 Method A - System B
(5) ASTM D 471

TABLE 2

| Elastomeric composition: VULCANIZATION: in press at 170°C for 10 min., in oven at 250°C for 16 hours | | EXAMPLE 8 | 9 | 10 | 11 | 12 |
|---|---|---|---|---|---|---|
| Elastomer 2 | p. by wt. | 100 | 100 | 100 | 100 | 100 |
| Bisphenol AF | p. by wt. | 1,5 | 1,5 | 1,3 | 1,3 | 1,3 |
| Accelerator 1 | p. by wt. | 0,6 | 0,6 | 0,6 | 0,6 | 0,6 |
| MgO | p. by wt. | 3 | 3 | 3 | 3 | 3 |
| $Ca(OH)_2$ | p. by wt. | 6 | 6 | 6 | 6 | 6 |
| Fluoropolyether 1 | p. by wt. | - | 2 | 5 | - | - |
| Fluoropolyether 2 | p. by wt. | - | - | - | 2 | 5 |
| CARBON BLACK MT | p. by wt. | 25 | 25 | 25 | 25 | 25 |
| Extrudability Test (4) | (edge | 5 | 7 | 8 | 7 | 8 |
| " " " " " | (surface | B | A | A | A | A |
| CHARACTERISTICS OF THE VULCANIZATE: | | | | | | |
| Tensile strength (1) | M Pa | 15,0 | 13,5 | 10,0 | 14.5 | 12.0 |
| Elongation at break (1) | % | 200 | 225 | 240 | 220 | 240 |
| Shore hardness A (2) | points | 72 | 70 | 68 | 69 | 65 |
| Characteristics at low temperature: | | | | | | |
| Brittle Point (3) | °C | -35/-40 | -41/-45 | -45/-50 | -42/-46 | -46/-50 |
| CHEMICAL STABILITY (5) | | | | | | |
| Methanol, 3 days, 20°C $\Delta$ V | % | 30 | 27 | 15 | 26 | 16 |
| Fuel C., 7 days, 70°C $\Delta$ V | % | 16 | 14 | 10 | 15 | 12 |

(1) ASTM D 412
(2) ASTM D 2240
(3) ASTM D 746
(4) ASTM D 2230 - 73 - Method A - System B
(5) ASTM D 471

## Claims

**1.** Vulcanizable compositions of fluoroelastomers based on vinylidene fluoride exhibiting improved processability and chemical stability, comprising, as a processing coadjuvant, a mono- or di-hydroxypolyfluoroether having an average molecular weight of ≧ 400 (monohydroxypolyfluoroether) and ≧ 2500 (dihydroxypolyfluoroether) respectively, comprising fluorooxyalkylene repeating units selected from the following classes:

Monohydroxypolyfluoroethers:

1) $(C_3F_6O)$ $(CFXO)$
wherein X is -F or $-CF_3$; said units being statistically distributed along the fluoropolyoxyalkylene chain;

2) $(C_3F_6O)$;
3) $(CH_2CF_2CF_2O)$;

Dihydroxypolyfluoroethers:

4) $(C_2F_4O)$, $(CF_2O)$, said units being statistically distributed along the fluoropolyoxylalkylene chain;
5) $(C_3F_6O)$, $(C_2F_4O)$, (CFXO), where X is -F or $-CF_3$, said units being statistically distributed along the fluoropolyoxyalkylene chain;
6) $CH_2$ - $CF_2$ - $CF_2$ - O -,
said units being linked within the fluoropolyoxyalkylene chain in the following manner:

$-(O-CF_2-CF_2-CH_2)_p$ - O - $R'_f$ - O $-(CH_2-CF_2-CF_2-O)_q-$

wherein $R'_f$ is a fluoroalkylene group containing from 1 to 8 carbon atoms and p and q are integers such that (p + q) ranges from 9 to 38;
7)

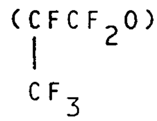

said units being linked within the fluoropolyoxyalkylene chain in the following manner:

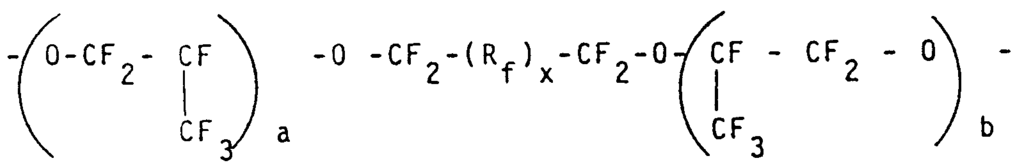

where $R_f$ is a fluoroalkylene group containing from 1 to 8 carbon atoms, x is 0 or 1 and a and b are integers such that (a + b) ranges from 12 to 50.

**2.** Vulcanizable compositions according to claim 1, wherein the monohydroxypolyfluoroethers of class 1) are selected from those having the general formula:

$CF_3-(C_3F_6O)_{m'}$ $(CFXO)_{n'}$ - CFX - ZH

with

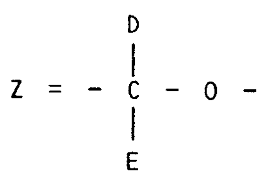

where D and E are the same or different and are selected from -H, $-CH_3$ and $-CF_3$, X is -F or $-CF_3$ and m' and n' are positive integers of from 1 to 40 such that the m'/n' ratio ranges from 1 to 20.

**3.** Vulcanizable compositions according to claim 1, wherein the monohydroxypolyfluoroethers of class 2) are selected from those having the general formula:

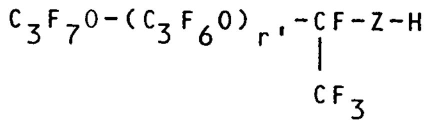

where r' is an integer of from 1 to 45 and Z is defined as in claim 2.

**4.** Vulcanizable compositions according to claim 1, wherein the monohydroxypolyfluoroethers of class 3) are selected from those having the general formula:

$F(CH_2CF_2CF_2O)_{s'}$ $-CH_2-CF_2$ - Z-H

where s' is an integer of from 2 to 50 and Z is as defined in claim 2.

**5.** Vulcanizable compositions according to claim 1, wherein the fluoropolyoxyalkylene diols belonging to class 4) are selected from those having the general formula:

$HZ-CF_2O\ (C_2F_4O)_m(CF_2O)_n\ CF_2-ZH$

where Z is as defined in claim 2 and m and n are integers such that (m + n) is from 24 to 100 and the m/n ratio ranges from 0.5 to 1.5, with the oxyfluoroalkylene units being statistically distributed along the chain.

**6.** Vulcanizable compositions according to claim 1, wherein the fluoropolyoxyalkylene diols belonging to class 5) are selected from those having the general formula:

$HZ-CF_2-(C_3F_6O)_r(C_2F_4O)_s(CFXO)_t-CF_2-ZH$

where X is -F or $-CF_3$, r is an integer of from 2 to 8, s and t each are integers of from 10 to 40 and Z is as defined in claim 2.

**7.** Vulcanizable compositions according to claim 1, wherein the fluoropolyoxyalkylene diols belonging to class 6) are selected from those having the general formula:

$HZ-CF_2CH_2(OCF_2CF_2CH_2)_p-OR'_f-O-(CH_2CF_2CF_2O)_qCH_2CF_2-ZH$

where Z is as defined in claim 2.

**8.** Vulcanizable compositions according to claim 1, wherein the fluoropolyoxyalkylene diols belonging to class 7) are selected from those having the general formula:

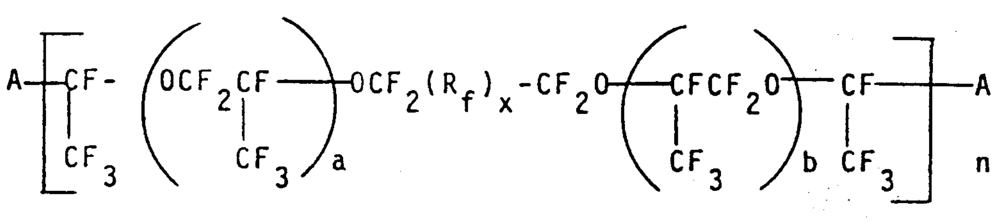

where A is a group comprising the end group -OH, n is an integer equal to or greater than 1.

**9.** Vulcanizable compositions according to any one of claims 1 to 8, wherein the fluoroelastomer is a copolymer of vinylidene fluoride, perfluoropropene and, optionally, tetrafluoroethylene.

**10.** Vulcanizable compositions according to any one of claims 1 to 9, wherein the mono- or dihydroxypolyfluoroethers are present in amounts of from 0.5 to 15 parts by weight per 100 parts of fluoroelastomer.

11. Vulcanizable compositions according to any one of claims 1 to 10, comprising polyfluoroethers not containing functional groups corresponding to the classes indicated for the mono- and dihydroxypolyfluoroethers, in amounts ranging from 0.5 to 4 parts by weight per 100 parts of fluoroelastomer.

## Revendications

1. Compositions vulcanisables de fluoroélastomères à base de fluorure de vinylidène présentant une aptitude à la transformation et une stabilité chimique améliorées comprenant comme co-adjuvant de traitement un mono- ou di-hydroxypolyfluoroéther dont le poids moléculaire est ≧ à 400 (monohydroxypolyfluoroéther) et ≧ à 2500 (dihydroxypolyfluoroéther) respectivement comprenant des motifs répétitifs fluoro-oxyalkylènes choisis parmi les classes suivantes:
Mono-hydroxypolyfluoroéthers
1) $(C_3F_6O)$ (CFXO), X représentant -F ou $-CF_3$; ces motifs étant distribués statistiquement le long de la chaîne fluoropolyoxyalkylène;
2) $(C_3F_6O)$;
3) $(CH_2CF_2CF_2O)$.
Di-hydroxypolyfluoroéthers
4) $(C_2F_4O)$, $(CF_2O)$, ces motifs étant distribués statistiquement le long de la chaîne fluoropolyoxyalkylène;
5) $(C_3F_6O)$, $(C_2F_4O)$, (CFXO), X représentant -F ou $-CF_3$, ces motifs étant distribués statistiquement le long de la chaîne fluoropolyoxyalkylène;
6) $(CH_2-CF_2-CF_2-O)$, ces motifs étant, au sein de la chaîne fluoropolyoxyalkylène, liés de la façon suivante:

$$-(O-CF_2-CF_2-CH_2)_p-O-R'_f-O-(CH_2-CF_2-CF_2-O)_q-$$

$R'_f$ représentant un groupe fluoroalkylène renfermant de 1 à 8 atomes de carbone et p et q étant des nombres entiers, la valeur de p + q étant comprise entre 9 et 38;
7)

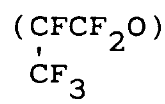

ces motifs étant, au sein de la chaîne fluoropolyoxyalkylène, liés de la façon suivante:

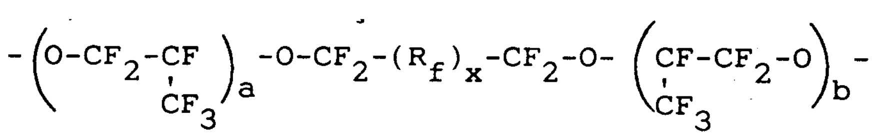

$R_f$ étant un groupe fluoroalkylène renfermant de 1 à 8 atomes de carbone, x est égal à 0 ou 1, a et b sont des nombres entiers, la valeur de a + b étant comprise entre 12 et 50.

2. Compositions vulcanisables selon la revendication 1, caractérisées en ce que les monohydroxypolyfluoroéthers de classe 1 sont choisis parmi ceux représentant la formule générale suivante:

$$CF_3-(C_3F_6O)_{m'}(CFXO)_{n'}-CFX-ZH$$

avec Z =

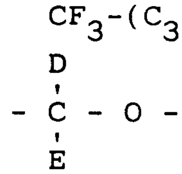

dans laquelle:
D et E sont identiques ou différents et sont choisis parmi -H, $-CH_3$ et $-CF_3$,

X représente -F ou $-CF_3$; et
m' et n' sont des nombres entiers positifs dont les valeurs sont comprises entre 1 et 40, de telle sorte que le rapport m'/n' soit compris entre 1 et 20.

**3.** Compositions vulcanisables selon la revendication 1, caractérisées en ce que les monohydroxypolyfluoroéthers de classe 2 sont choisis parmi ceux répondant à la formule générale suivante:

$$C_3F_7O-(C_3F_6O)_{r'}-\underset{\displaystyle CF_3}{\underset{|}{C}F}-Z-H$$

dans laquelle
r' est un nombre entier dont la valeur est comprise entre 1 et 45; et
Z est tel que défini dans la revendication 2.

**4.** Compositions vulcanisables selon la revendication 1, caractérisées en ce que les monohydroxypolyfluoroéthers de classe 3 sont choisis parmi ceux répondant à la formule générale suivante:

$$F(CH_2CF_2CF_2O)_{s'}-CH_2CF_2-Z-H$$

dans laquelle:
s' et un nombre entier dont la valeur est comprise entre 2 et 50; et
Z est tel que défini dans la revendication 2.

**5.** Compositions vulcanisables selon la revendication 1, caractérisées en ce que les fluoropolyoxyalkylèneglycols appartenant à la classe 4 sont choisis parmi les dérivés représentant la formule générale suivante:

$$HZ-CF_2O(C_2F_4O)_m(CF_2O)_nCF_2-ZH$$

dans laquelle:
Z est tel que défini dans la revendication 2;
m et n sont des entiers tels que la valeur de m + n est comprise entre 24 et 100 et le rapport m/n est compris entre 0,5 et 1,5, les motifs oxyfluoroalkylènes étant distribués statistiquement le long de la chaîne.

**6.** Compositions vulcanisables selon la revendication 1, caractérisées en ce que les fluoropolyoxyalkylèneglycols appartenant à la classe 5 sont choisis parmi les dérivés représentant la formule générale suivante:

$$HZ-CF_2(C_3F_6O)_r(C_2F_4O)_s(CFXO)_t-CF_2-ZH$$

dans laquelle:
X représente -F ou $-CF_3$;
r représente un nombre entier dont la valeur est comprise entre 2 et 8;
s et t sont des nombres entiers dont la valeur est comprise entre 10 et 40; et
Z est tel que défini dans la revendication 2.

**7.** Compositions vulcanisables selon la revendication 1, caractérisées en ce que les fluoropolyoxyalkylèneglycols appartenant à la classe 6 sont choisis parmi les dérivés représentant la formule générale suivante:

$$HZ-CF_2CH_2(OCF_2CF_2CH_2)_p-OR'_f-O-(CH_2CF_2CF_2O)_q(CH_2CF_2-ZH$$

dans laquelle:
Z est tel que défini dans la revendication 2.

**8.** Compositions vulcanisables selon la revendication 1, caractérisées en ce que les fluoropolyoxyalkylèneglycols appartenant à la classe 7 sont choisis parmi les dérivés représentant la formule générale suivante:

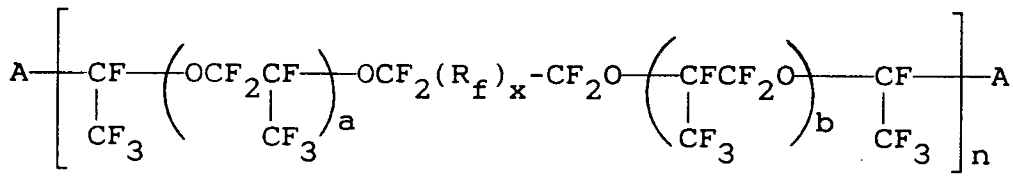

dans laquelle:

A représente un groupe comprenant le groupe terminal -OH, par exemple $CH_2OH$; et
n est un nombre entier égal ou supérieur à 1.

**9.** Compositions vulcanisables selon l'une quelconque des revendications 1 à 8, caractérisées en ce que le fluoroélastomère est un copolymère de fluorure de vinylidène, perfluoropropène et, éventuellement, de tétrafluoroéthylène.

**10.** Compositions vulcanisables selon l'une quelconque des revendications 1 à 9, caractérisées en ce que les mono- ou di-hydroxypolyfluoroéthers sont présents en quantité de 0,5 à 15 parties en poids pour cent parties de fluoroélastomère.

**11.** Compositions vulcanisables selon l'une quelconque des revendications 1 à 10, comprenant des polyfluoroéthers dépourvus des groupes fonctionnels correspondant aux classes indiquées pour les mono- et di-hydroxypolyfluoroéthers, en quantités comprises entre 0,5 et 4 parties en poids pour cent parties de fluoroélastomère.

## Patentansprüche

**1.** Vulkanisierbare Zusammensetzungen von Fluorelastomeren auf Vinylidenfluorid-Basis, die verbesserte Verarbeitbarkeit und chemische Stabilität aufweisen, umfassend als Verarbeitungs-Hilfsstoff einen Mono- oder Dihydroxypolyfluorether mit einem durchschnittlichen Molekulargewicht von ≧ 400 (Monohydroxypolyfluorether) bzw. ≧ 2500 (Dihydroxypolyfluorether), welcher Fluoroxyalkylen-Struktureinheiten umfaßt, die aus den folgenden Klassen ausgewählt sind:

Monohydroxypolyfluorether:

1) $(C_3F_6O)$ $(CFXO)$
worin X -F oder $-CF_3$ ist; wobei die Einheiten statistisch entlang der Fluorpolyoxyalkylen-Kette verteilt sind;
2) $(C_3F_6O)$;
3) $(CH_2CF_2CF_2O)$;

Dihydroxypolyfluorether:

4) $(C_2F_4O)$, $(CF_2O)$, wobei die Einheiten statistisch entlang der Fluorpolyoxyalkylen-Kette verteilt sind;
5) $(C_3F_6O)$, $(C_2F_4O)$, $(CFXO)$, worin X -F oder $-CF_3$ ist, wobei die Einheiten statistisch entlang der Fluorpolyoxyalkylen-Kette verteilt sind;
6) $CH_2$ - $CF_2$ - $CF_2$ - O -,
wobei die Einheiten innerhalb der Fluorpolyoxyalkylen-Kette auf folgende Weise miteinander verknüpft sind:

$$-(O-CF_2-CF_2-CH_2)_p- O - R'_f - O -(CH_2-CF_2-CF_2-O)_q-$$

worin $R'_f$ eine Fluoralkylengruppe mit 1 bis 8 Kohlenstoffatomen ist und p und q ganze Zahlen sind, derart, daß (p + q) im Bereich von 9 bis 38 liegt ;
7)

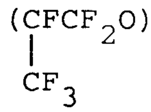

wobei die Einheiten innerhalb der Fluorpolyoxyalkylen-Kette auf folgende Weise miteinander verknüpft sind:

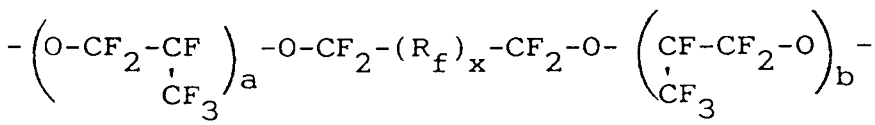

worin $R_f$ eine Fluoralkylengruppe mit 1 bis 8 Kohlenstoffatomen ist, x 0 oder 1 ist und a und b ganze Zahlen sind, derart, daß (a + b) im Bereich von 12 bis 50 liegt.

**2.** Vulkanisierbare Zusammensetzungen nach Anspruch 1, worin die Monohydroxypolyfluorether der Klasse 1) aus solchen der allgemeinen Formel:

$CF_3-(C_3F_6O)_{m'}\ (CFXO)_{n'}\ -\ CFX\ -\ ZH$

mit

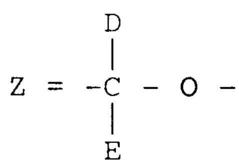

ausgewählt sind, worin D und E gleich oder verschieden sind und aus -H, $-CH_3$ und $-CF_3$ ausgewählt sind, X -F oder $-CF_3$ ist und m' und n' ganze Zahlen von 1 bis 40 sind, derart, daß das Verhältnis m'/n' 1 bis 20 beträgt.

**3.** Vulkanisierbare Zusammensetzungen nach Anspruch 1, worin die Monohydroxypolyfluorether der Klasse 2) aus solchen der allgemeinen Formel:

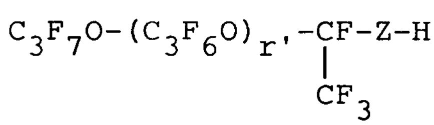

ausgewählt sind, worin r' eine ganze Zahl von 1 bis 45 ist und Z wie in Anspruch 2 definiert ist.

**4.** Vulkanisierbare Zusammensetzungen nach Anspruch 1, worin die Monohydroxypolyfluorether der Klasse 3) aus solchen der allgemeinen Formel:

$F(CH_2CF_2CF_2O)_{s'}-CH_2-CF_2-Z-H$

ausgewählt sind, worin s' eine ganze Zahl von 2 bis 50 ist und Z wie in Anspruch 2 definiert ist.

**5.** Vulkanisierbare Zusammensetzungen nach Anspruch 1, worin die Fluorpolyoxyalkylen-Diole, die zur Klasse 4) gehören, aus solchen der allgemeinen Formel

$HZ-CF_2O\ (C_2F_4O)_m(CF_2O)_n\ CF_2-ZH$

ausgewählt sind, worin Z wie in Anspruch 2 definiert ist und m und n ganze Zahlen sind, derart, daß (m + n) 24 bis 100 ist, und das Verhältnis m/n 0,5 bis 1,5 beträgt, wobei die Oxyfluoralkylen-Einheiten statistisch entlang der Kette verteilt sind.

**6.** Vulkanisierbare Zusammensetzungen nach Anspruch 1, worin die Fluorpolyoxyalkylen-Diole, die zur Klasse 5) gehören, aus solchen der allgemeinen Formel

$HZ\text{-}CF_2\text{-}(C_3F_6O)_r(C_2F_4O)_s(CFXO)_t\text{-}CF_2\text{-}ZH$

ausgewählt sind, worin X -F oder $-CF_3$ bedeutet, r eine ganze Zahl von 1 bis 8 ist, s und t jeweils ganze Zahlen von 10 bis 40 sind und Z wie in Anspruch 2 definiert ist.

**7.** Vulkanisierbare Zusammensetzungen nach Anspruch 1, worin die Fluorpolyoxyalkylen-Diole, die zur Klasse 6) gehören, aus solchen der allgemeinen Formel

$HZ\text{-}CF_2CH_2(OCF_2CF_2CH_2)_p\text{-}OR'_f\text{-}O\text{-}(CH_2CF_2CF_2O)_qCH_2CF_2\text{-}ZH$

ausgewählt sind, worin Z wie in Anspruch 2 definiert ist.

**8.** Vulkanisierbare Zusammensetzungen nach Anspruch 1, worin die Fluorpolyoxyalkylen-Diole, die zur Klasse 7) gehören, aus solchen der allgemeinen Formel:

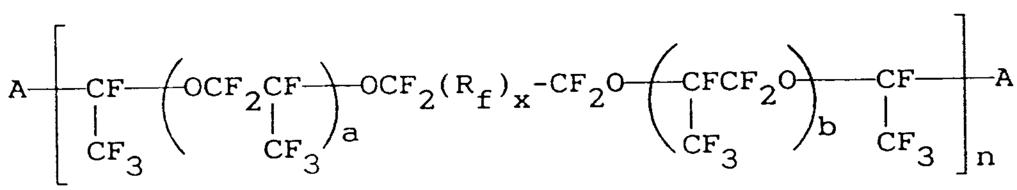

ausgewählt sind, worin A eine Gruppe ist, die die Endgruppe -OH enthält, und n eine ganze Zahl ≧ 1 ist.

**9.** Vulkanisierbare Zusammensetzungen nach irgendeinem der Ansprüche 1 bis 8, worin das Fluorelastomer ein Copolymer von Vinylidenfluorid, Perfluorpropen und gegebenenfalls Tetrafluorethylen ist.

**10.** Vulkanisierbare Zusammensetzungen nach irgendeinem der Ansprüche 1 bis 9, worin die Mono- oder Dihydroxypolyfluorether in Mengen von 0,5 bis 15 Gew.-Teilen pro 100 Teile des Fluorelastomers anwesend sind.

**11.** Vulkanisierbare Zusammensetzungen nach irgendeinem der Ansprüche 1 bis 10, welche Polyfluorether, die keine funktionellen Gruppen entsprechend den für die Mono- und Dihydroxypolyfluorether angegebenen Klassen enthalten, in Mengen von 0,5 bis 4 Gew.-Teilen pro 100 Teile des Fluorelastomers umfassen.